Europäisches Patentamt

European Patent Office

Office européen des brevets

(19)

(11) Veröffentlichungsnummer: **0 166 791**
**B1**

(12) # EUROPÄISCHE PATENTSCHRIFT

(45) Veröffentlichungstag der Patentschrift:
16.12.87

(21) Anmeldenummer: 84106286.2

(22) Anmeldetag: 01.06.84

(51) Int. Cl.⁴: **B 65 G 49/04,** B 66 C 7/08, B 66 C 9/08, B 66 C 11/00, E 01 B 25/24

(54) Transportvorrichtung mit Laufschiene und rädergeführter Laufkatze.

(43) Veröffentlichungstag der Anmeldung:
08.01.86 Patentblatt 86/2

(45) Bekanntmachung des Hinweises auf die Patenterteilung:
16.12.87 Patentblatt 87/51

(84) Benannte Vertragsstaaten:
DE FR GB IT NL

(56) Entgegenhaltungen:
DE-A-2 716 453
DE-A-2 718 640
FR-A-1 418 385
FR-A-2 242 277
FR-A-2 334 588
FR-A-2 336 287
GB-A-2 048 806
US-A-3 092 039

(73) Patentinhaber: Branson Europa B.V., Energieweg 2, NL- 3762 ET Soest (NL)

(72) Erfinder: Eichenauer, Karl- Friedrich, Kurt- Schumacher- Strasse 7, D-6310 Grünberg (DE)

(74) Vertreter: Dipl.- Ing. H. Hauck Dipl.- Phys. W. Schmitz Dipl.- Ing. E. Graalfs Dipl.- Ing. W. Wehnert Dr.- Ing. W. Döring, Mozartstrasse 23, D-8000 München 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft eine Transportvorrichtung, die eine an den Enden abgestützte Laufschiene und eine Laufkatze mit Trag- und Stützrädern zum Transport von Stückgut enthält.

Zum Transport von Stückgut, das können einzelne Teile oder Behälter für kleinere Teile sein, werden in vielen Bereichen der Technik Transportsysteme nach unterschiedlichen Konstruktionsprinzipien verwendet. So ist es z. B. bekannt, bei der Reinigung von mechanisch oder chemisch bearbeiteten Teilen, die oft in Transportbehälter eingelegt sind, ein Gerüst mit einer Laufschiene und einer Laufkatze zu verwenden. Die Laufschiene muß eine freie Länge aufweisen, die den gesamten Transportweg überspannt. Die Laufkatze besitzt eine Hubvorrichtung mit Hilfe derer das Stückgut gehoben und abgesenkt wird.

Transportvorrichtungen dieser Gattung weisen allgemein eine Laufschiene mit rechteckigem Querschnitt auf. Auf einer derartigen Laufschiene ist dann eine Laufkatze mit Trag- und Stützrädern beweglich angeordnet. Transportvorrichtungen dieser Art sind in den Patentanmeldungen DE-OS 27 18 640 und DE-OS 27 09 208 beschrieben.

Derartige bekannte Transportvorrichtungen weisen wesentliche Nachteile auf. Der Materialquerschnitt der Laufschiene muß sowohl für die zu tragende Last als auch für die zu überspannende Länge bemessen werden. Das hat zur Folge, daß für kleinere Lasten oder kleinere zu überspannende Längen die Laufschiene überdimensioniert ist. Aus der DE-OS 27 09 208 ist es darüber hinaus bekannt, zur Anpassung der Laufschiene an unterschiedliche Transportwege, Laufschienenelemente baukastenmäßig linear aneinanderzureihen. Hierbei ist es weiterhin nachteilig, daß jedes Einzelelement im Querschnitt für die maximale Länge und die maximale Last bemessen sein muß.

Rechteckprofile der bekannten Transportvorrichtungen sind für eine exakte Führung der Laufkatze nachteilig. Bei automatisch arbeitenden und mit Mikroprozessoren gesteuerten Transportsystemen, wie sie z. B. für die Ultraschallreinigungstechnik verwendet werden, sind exakte Laufkatzenführungen sowohl bezüglich der Richtung in Laufschiene als auch quer dazu, erforderlich.

Auch ist es für die angegebene Verwendung notwendig, die Laufkatze exakt zu positionieren. Bei bekannten Transportvorrichtungen, wie sie z. B. der DE-OS 23 43 502 zu entnehmen sind, wird die Laufkatze über eine Tragradfriktion angetrieben. Dieser Laufkatzenantrieb ist für eine exakte Positionierung ungeeignet. Es sind auch andere Friktionsantriebe mit Antriebsriemen bekannt, wie z. B. der DE-OS 26 45 883 zu entnehmen ist. Derartige Friktionsantriebe werden dort verwendet, wo plötzliche und stoßartige Bewegungsänderungen vermieden werden müssen. Es liegt auf der Hand, daß mit diesen Antrieben eine exakte Positionierung der Laufkatze nicht ohne komplizierte Nachsteuereinrichtungen möglich ist.

Eine bekannte Transportvorrichtung (US-PS-3 092 039) gemäß der im Oberbegriff des Anspruchs 1 angegebenen Gattung weist zwei horizontale Laufbahnen zur Auflage von je einem Tragrad und zusätzlich an der Ober- und Unterseite der Laufschiene vorstehende bachförmige Planflächen auf, an denen paarweise Stützräder anliegen, so daß jeweils zwei Tragräder mit vier Stützrädern erforderlich sind.

Der vorliegenden Erfindung liegt die Aufgabe zugrunde, eine Transportvorrichtung anzugeben, die den geforderten Lasten und den zu überspannenden Längen kostengünstig angepaßt werden kann, bei der ein exakter Lauf der Laufkatze gewährleistet ist und die eine genaue Positionierung der Laufkatze zuläßt.

Die Aufgabe wird erfindungsgemäß durch die Merkmale des kennzeichnenden Teils des Anspruchs 1 gelöst.

Die weiteren Ansprüche offenbaren vorteilhafte Ausgestaltungen der vorliegenden Erfindung.

Einzelheiten und Vorteile der Erfindung werden im folgenden anhand von Ausführungsbeispielen und mit Hilfe der Figuren 1 bis 4 beschrieben.

Es zeigen:

Fig. 1: den Querschnitt einer Führungsschiene mit aufgesetzter Laufkatze;

Fig. 2: Eine perspektivische Ansicht der Führungsschiene mit Laufkatze, einer für die Bewegung der Laufkatze vorgesehenen Gliederkette, einem Antriebsmotor und einer Traverse als Teil des Haltegerüstes für die Transportvorrichtung;

Fig. 3: den Querschnitt einer baukastenartig zusammengesetzten Führungsschiene;

Fig. 4: die Verwendung der Transportvorrichtung am Beispiel einer Ultraschall-Reinigungsanlage.

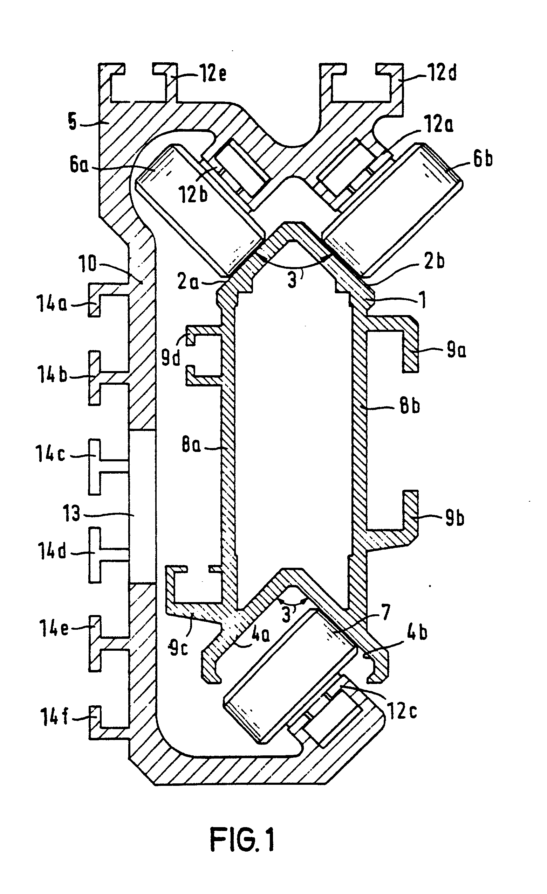

Als ein Ausführungsbeispiel zeigt Fig. 1 im Querschnitt die Laufschiene 1 mit aufgesetzter Laufkatze 5. Die Laufschiene 1 ist als Hohlkörper ausgebildet und weist außen auf ihrem tragenden Oberteil zwei erste Planflächen auf, die als erste und zweite Laufbahnen 2a, 2b ausgebildet sind und die den Dachwinkel 3 von vorzugsweise 90° einschließen. Von dem Oberteil gehen beidseitig zwei Wangen 8a, 8b nach unten und tragen das Unterteil der Laufschiene 1 ebenfalls mit zwei zweiten Planflächen 4a, 4b, wobei eine Planfläche 4b als dritte Laufbahn verwendet wird. Diese unteren zwei Planflächen 4a, 4b schließen den gleichen Dachwinkel 3 ein, wie die oberen zwei Planflächen 2a, 2b. Weiterhin verlaufen die Planflächen 4a und 2a sowie die Planflächen 4b und 2b zueinander parallel. Die Wangen 8a, 8b weisen äußere Montageschienen 9a - 9d auf. Diese Montageschienen können T-förmig oder schwalbenschwanzförmig ausgebildet sein oder wie in Fig. 1 gezeigt, zum Aufnehmen von Nut-Steinen, Schrauben, oder anderen Montageteilen, ein Rechteck umschließen.

Wie die Fig. 1 weiterhin zeigt, hat die Laufkatze 5 innen in ihrem oberen Teil zwei Montageschienen 12a, 12b und innen in ihrem unteren Teil eine weitere Montageschiene 12c. Diese Montageschienen 12a, 12b, 12c sind so angeordnet, daß eingesetzte Schrauben parallel zu den Flächen der Laufbahnen 2a, 2b, 4b der Laufschiene 1 und dabei senkrecht zur Spur der Laufbahnen liegen. In die oberen Montageschienen 12a, 12b sind die Tragräder 6a, 6b eingesetzt. Die Anzahl der einzusetzenden Tragräder wird nach der entsprechenden Belastung der Laufkatze 5 gewählt. In die untere Montageschiene 12c wird mindestens ein Stützrad 7 eingesetzt. Die Laufkatze 5 besitzt nur eine Wange 10, so daß ihr Querschnittsprofil einseitig offen ist. Die Wange 10 weist äußere Montageschienen 14a bis 14f auf, die parallel zu den anderen Montageschienen 12a bis 12c verlaufen.

Die Laufkatze 5 ist mit den Tragrädern 6a, 6b rollbar auf die Laufschiene 1 aufgesetzt. Durch die im Dachwinkel 3 von vorzugsweise 90° zueinander angeordneten Laufbahnen und den entsprechend angeordneten Tragrädern in Verbindung mit einer unteren im gleichen Dachwinkel angeordneten Laufbahn 4b und dem entsprechenden Stützrad 7, ergibt sich vorteilhafterweise eine spielfreie, sehr genau justierbare bzw. sich selbst justierende und damit präzise Laufbewegung der Laufkatze 5 auf der Laufschiene 1.

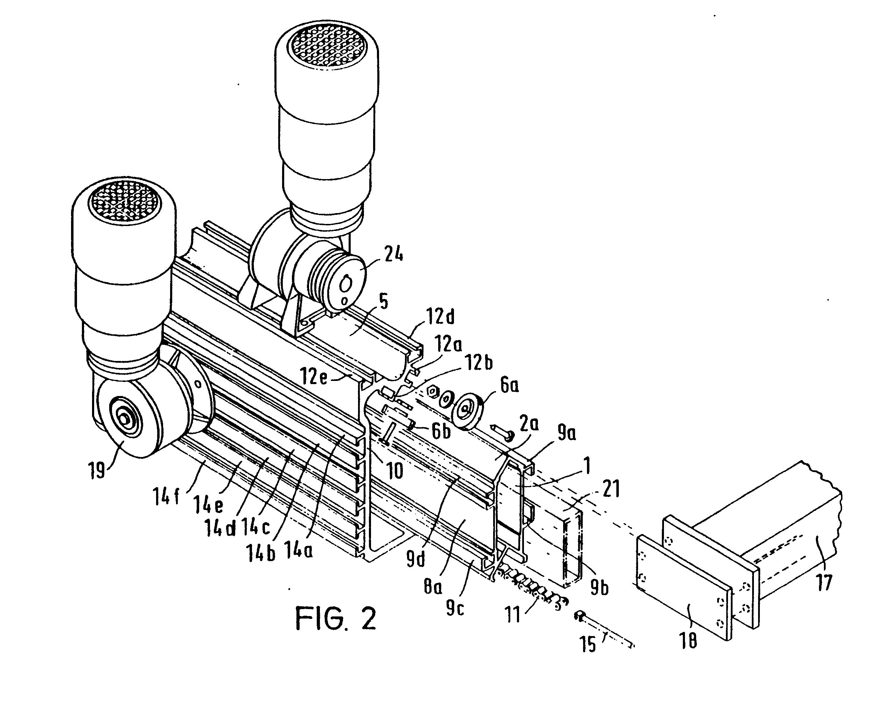

Wie Fig. 2 zeigt, eignen sich die Montageschienen 9a, 9b in der Wange 8b der Laufschiene 1 vorzugsweise zur Befestigung der Laufschiene 1 auf z. B. Traversen 17. Hierzu können paßgerecht gefertigte Montageelemente 18 verwendet werden. Die Montageschiene 9c kann zur Aufnahme eines Antriebselementes, vorzugsweise eine feststehende Rollenkette 11, verwendet werden. Eine in einer derartigen Nut fixierte Rollenkette ist kostengünstiger als z. B. eine festangebrachte Zahnstange und kann vorteilhafterweise als "Meterware" jeder Laufschienenlänge angepaßt werden. Gespannt wird die Kette 11 mit bekannten Spannelementen 15.

In der Wange 10 der Laufkatze 5 ist ein Wangendurchbruch 13 vorhanden; sichtbar in der Fig. 1. Durch diesen Wangendurchbruch 13 wird ein motorangetriebenes Ritzel geführt (in den Figuren nicht sichtbar), das in die Rollenkette 11 eingreift. Dadurch kann sich die Laufkatze 5 motorangetrieben auf der Laufschiene 1 bewegen. Der Motor 19 wird vorzugsweise mit Hilfe der in der Wange 10 der Laufkatze vorhandenen Montageschienen 14a bis 14f mit der Laufkatze fest verbunden. Dieser in der Erfindung verwendete Antrieb hat den Vorteil, daß die Laufkatze exakt zu positionieren ist, da eine konstante Zuordnung der Ritzelstellung zu den Gliedern der Kette vorhanden ist, die bei einem Friktionsantrieb entfällt. Die Laufkatze 5 weist in ihrem oberen Teil auch nach außen gerichtete Montageschienen 12d, 12e auf. Mit Hilfe dieser Montageschienen 12d, 12e kann eine Hebevorrichtung 24 für Stückgut an der Laufkatze 5 angebracht werden.

Weiterhin zeigt die Fig. 2 ein in das Hohlprofil der Laufschiene 1 eingeschobenes Rechteckrohr 21. Mit diesem Rechteckrohr 21 wird die Laufschiene 1 für größere zu überbrückende Längen oder höhere Traglasten vorteilhafterweise verstärkt.

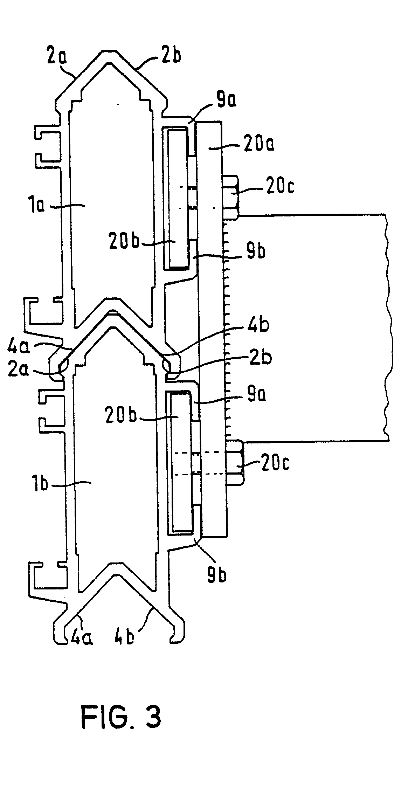

In der Fig. 3 ist eine weitere oder alternative Verstärkung dargestellt. Die Querschnittsform der Laufschiene 1 hat den Vorteil, zwei oder mehr Laufschienen 1a, 1b baukastenmäßig übereinander anzuordnen. Hierfür werden vorzugsweise die Montageschienen 9a und 9b benutzt. Die notwendigen Montagemittel sind in der Fig. 3 mit 20a, 20b, 20c bezeichnet. Eine derartige Laufschienenverstärkung erfordert lediglich eine Laufkatze mit verlängerter Wange.

Die dem Schutzanspruch zugrundeliegende Transportvorrichtung eignet sich insbesondere für den Transport von Stückgut von einem Abnahmetisch zu einer ersten Arbeitsposition, von dort zu weiteren Arbeitspositionen und dann zum Ablagetisch. Hierfür ist die Hebevorrichtung 24 dann so ausgebildet, daß sie das Stückgut in vertikaler Richtung bewegen kann.

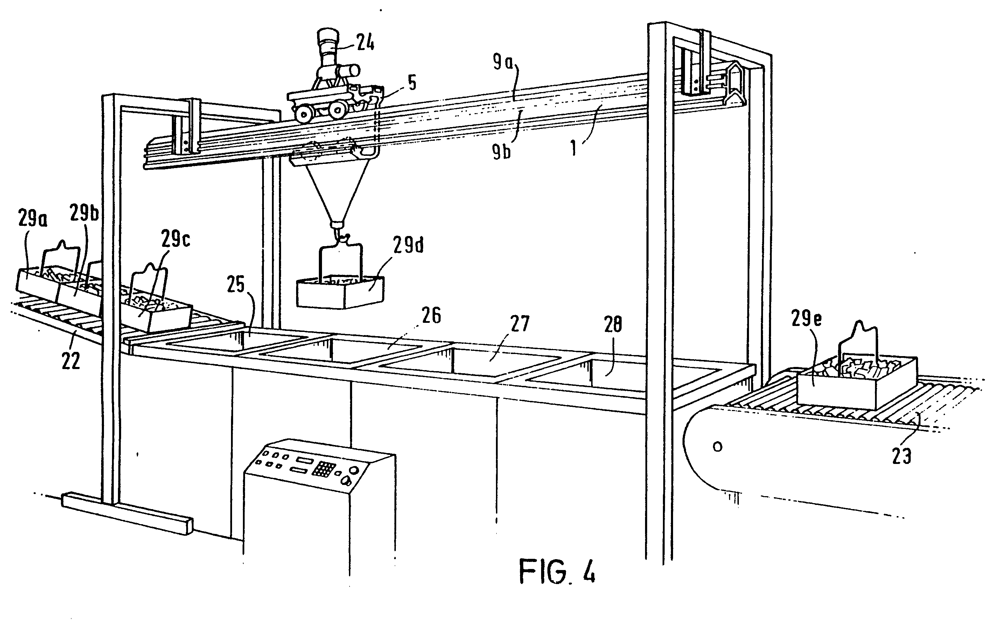

In Fig. 4 ist am Beispiel einer Ultraschall-Reinigungsanlage diese Verwendung der erfindungsgemäßen Transportvorrichtung dargestellt. In dieser Figur sind Abnahme- und Ablagetisch mit 22 und 23, die Arbeitspositionen, das sind hier die Reinigungsbäder, mit 25, 26, 27, 28 und das Stückgut mit 29a, 29b, 29c, 29d, 29e bezeichnet.

Bei derartigen Verwendungen ist es erforderlich, die Laufkatze exakt und spielfrei zu führen und genau zu positionieren. Diese Bedingungen werden durch die erfindungsgemäße Transportvorrichtung erfüllt. Auch kann die Tragfähigkeit dieser Transportvorrichtung durch Obereinandersetzen von zwei oder mehr Laufschienen und/oder durch Verstärkung mit Rechteckrohren ebenso wie die zu überspannende Länge, kostengünstig dem Bedarfsfall angepaßt werden, wozu keine Konstruktionsänderungen erforderlich sind.

## Patentansprüche

1. Transportvorrichtung, die eine in den Enden abgestützte Laufschiene (1) und eine Laufkatze (5) mit Trag- und Stützrädern (6a, 6b; 7) enthält, bei der das Oberteil der als Hohlkörper ausgebildeten Laufschiene (1) in Längsrichtung außenliegende erste Planflächen aufweisende Laufbahnen (2a, 2b) für die Tragräder (6a, 6b) aufweist und das Unterteil der Laufschiene (1), das über seitliche Wangen (8a, 8b) mit dem Oberteil verbunden ist, in Längsrichtung zwei außenliegende zweite Planflächen aufweisende Laufbahnen (4 a, 4b) aufweist, bei der die Laufkatze (5) mindestens eine seitliche Wange (10) aufweist, die den oberen Laufteil mit dem unteren Stützteil der Laufkatze verbindet, und bei der die Tragräder (6a, 6b) im an den Laufbahnen (2a, 2b) aufliegen und die Stützräder (7) an den Laufbahnen (4a, 4b) anliegen, dadurch gekennzeichnet, daß die ersten Planflächen (2a,2b) und zweiten Planflächen (4a,4b) dachförmig unter jeweils dem gleichen Dachwinkel (3) zueinander geneigt angeordnet sind und paarweise parallel verlaufen, daß mindestens je ein Tragrad (6a,6b) auf der Außenseite des von den ersten Planflächen (2a,2b) gebildeten Daches aufliegt und mindestens ein Stützrad (7) an einer der Planflächen (4a,4b) auf der Innenseite des von den zweiten Planflächen gebildeten Daches anliegt.

2. Transportvorrichtung nach Anspruch 1, dadurch gekennzeichnet, daß die Laufschiene (1) außen an ihren seitlichen Wangen (8a,8b) in Längsrichtung Montageschienen (9a-9d) aufweist und daß in einer dieser Montageschienen ein Antriebselement (11) für die Laufkatze (5) vorhanden ist.

3. Transportvorrichtung nach Anspruch 2, dadurch gekennzeichnet, daß das Antriebselement (11) eine feststehende Rollenkette ist.

4. Transportvorrichtung nach einem der Ansprüche 1-3, dadurch gekennzeichnet, daß zur Vergrößerung der Tragfähigkeit zwei oder mehr Laufschienen (1a,1b) derart übereinander angeordnet sind, daß die oberen zwei ersten Planflächen (2a,2b) der unteren Laufschiene (1b) an die unteren zwei zweiten Planflächen (4a,4b) der oberen Laufschiene (1a) anliegen, wobei die Laufschienen (1a,1b) mit Montageteilen (20a,20c) unter Verwendung von Montageschienen (9a,9b) der Laufschienen (1a,1b) miteinander verbunden sind.

5. Transportvorrichtung nach einem der Ansprüche 1-4, dadurch gekennzeichnet, daß die Laufkatze (5) in ihrem oberen und unteren Teil in Längsrichtung innere und äußere Montageschienen (12a-12e) aufweist, wobei mindestens drei innere Montageschienen (12a,12b,12c) zur Aufnahme der Trag- und Stützräder (6a, 6b; 7) vorgesehen sind.

6. Transportvorrichtung nach einem der Ansprüche 1-5, dadurch gekennzeichnet, daß die Laufkatze (5) in ihrer Wange (10) äußere Montageschienen (14a-14f) und mindestens einen Wangendurchbruch (13) aufweist und daß an mindestens einer dieser Montageschienen (14a-14f) ein Antriebsmotor (19) angebracht ist, dessen Antriebsritzel durch den Wangendurchbruch (13) in das Antriebselement (11) in einer der Montageschienen der Laufschiene (1) eingreift.

7. Transportvorrichtung nach einem der Ansprüche 1-6, dadurch gekennzeichnet, daß in Montageschienen (12d,12e) der Laufkatze (5) eine Hebevorrichtung (24) für das zu transportierende Stückgut angebracht ist.

8. Transportvorrichtung nach einem der Ansprüche 1-7, dadurch gekennzeichnet, daß mindestens eine Laufschiene (1,1a,1b) mit Hilfe der Montageschienen (9a,9b) an einem Trägerteil (17) befestigt wird.

## Claims

1. A conveyor having an end-supported running rail (1) and a crab (5) having carrier and guide wheels (6a, 6b; 7), in which the top part of the hollow running rail (1) has two external longitudinally extending first plane surfaces forming ways (2a, 2b) for the carrier wheels (6a, 6b) and the bottom part of the rail (1), the same being connected by vertical side members (8a, 8b) to the top part, has two external longitudinally extending second plane surfaces forming ways (4a, 4b), in which the crab (5) has at least one vertical side member (10) which connects the top running portion to the bottom guide portion of the crab and in which the carrier wheels (6a, 6b) are supported on the ways (2a, 2b) and the guide wheels (7) are guided on the ways (4a, 4b), characterized in that the first plane surfaces (2a, 2b) and the second plane surfaces (4a, 4b) each are inclined rooflike under the same roof angle (3) and parallel extending in pairs, that at least a carrier wheel (6a, 6b) each is supported on the external side of the roof formed by said first plane surfaces (2a, 2b) and at least a guide wheel (7) is guided on the internal side of the roof formed by said second plane surfaces (4a, 4b).

2. A conveyor according to claim 1, characterized in that the rail (1) has externally on its side members (8a, 8b) longitudinal assembly bars (9a-9d) and a drive element (11) for the crab (5) is provided in one (9b) of the assembly bars.

3. A conveyor according to claim 2, characterized in that the drive element (11) is a stationary roller chain.

4. A conveyor according to one of claims 1 to 3, characterized in that to increase the carrying capacity two or more rails (1a, 1b) are so disposed one above another that the top two first plane surfaces (2a, 2b) of the bottom rail (1b) are contiguous with the bottom two second surfaces (4a,4b) of the top rail (1a), the rails (1a, 1b) being interconnected by assembly elements (20a, 20b, 20c) with the use of assembly bars (9a - 9b) of the rails (1a, 1b).

5. A conveyor according to one of claims 1 to 4, characterized in that the crab (5) has in its top part and bottom part longitudinally extending inner and outer assembly bars (12a-12e), at least three inner assembly bars (12a, 12b, 12c) being adapted to receive the carrying and guide wheels (6a, 6b; 7).

6. A conveyor according to one of claim 1 to 5, characterized in that the crab (5) has in its vertical side member (10) outer assembly bars (14a - 14f), such member being formed with at least one assembly aperture (13), and a driving motor (19) is disposed on at least one of the latter assembly bars (14a - 14f), the driving gear of the motor engaging through the assembly aperture (13) with the drive element (11) in one of the assembly bars of the rail (1).

7. A conveyor according to one of claims 1 to 6, characterized in that means (24) for lifting the piece material are disposed in assembly bars (12d, 12e) of the crab (5).

8. A conveyor according to one of claims 1 to 7, characterized in that at least one rail (1, 1a, 1b) is secured to a support structure (17) by means of the assembly bars (9a - 9b).

**Revendications**

1. Dispositif de transport comportant un rail de roulement (1) supporté à ses extrémités et un chariot (5) ayant des roues porteuses et des roues d'appui (6a, 6b ; 7), dans lequel la partie supérieure du rail de roulement (1), qui est un corps creux, comporte pour les roues porteuses (6a, 6b), dans la direction longitudinale, des chemins de roulement (2a, 2b) présentant des premières surfaces planes situées à l'extérieur, la partie inférieure du rail de roulement (1), qui est réunie à la partie supérieure par des joues latérales (8a, 8b), comporte dans la direction longitudinale deux chemins de roulement (4a, 4b) présentant des deuxièmes surfaces planes situées à l'extérieur, le chariot (5) présente au moins une joue latérale (10) qui réunit la partie supérieure, de roulement, à la partie inférieure, d'appui, du chariot, et les roues porteuses (6a, 6b) reposent sur les chemins de roulement (2a, 2b) et les roues d'appui (7) s'appuient contre les chemins de roulement (4a, 4b), caractérisé en ce que les premières surfaces planes (2a, 2b), de même que les deuxièmes surfaces planes (4a, 4b), sont inclinées l'une par rapport à l'autre de manière à former un toit, les deux toits formés ayant le même angle (3), et les premières et deuxièmes surfaces planes sont parallèles deux à deux, et en ce qu'au moins une roue porteuse (6a, 6b) repose sur chacune des premières surfaces planes (2a, 2b) sur le c*oté extérieur du toit formé par celles-ci et au moins une roue d'appui (7) s'appuie contre une des deuxièmes surfaces planes (4a, 4b) sur le c*oté intérieur du toit formé par celles-ci.

2. Dispositif de transport selon la revendication 1, caractérisé en ce que le rail de roulement (1) présente extérieurement sur ses joues latérales (8a, 8b), dans la direction longitudinale, des rails de montage (9a à 9d), et que dans un de ces rails de montage se trouve un élément d'entraînement (11) pour l'entraînement du chariot (5).

3. Dispositif de transport selon la revendication 2, caractérisé en ce que l'élément d'entraînement (11) est une chaîne à rouleaux fixe.

4. Dispositif de transport selon l'une des revendications 1 à 3, caractérisé en ce que pour l'augmentation de la capacité de charge, deux ou plus de deux rails de roulement (1a, 1b) sont superposés de façon que les deux premières surfaces planes, supérieures (2a, 2b) du rail de roulement inférieur (1b) soient contre les deux deuxièmes surfaces planes, inférieures (4a, 4b) du rail de roulement supérieur (1a), les rails de roulement (1a, 1b) étant assemblés au moyen de rails de montage (9a, 9b) de ceux-ci et d'éléments de montage (20a, 20c).

5. Dispositif de transport selon l'une des revendications 1 à 4, caractérisé en ce que le chariot (5) présente dans sa partie supérieure et sa partie inférieure, dans la direction longitudinale, des rails de montage intérieurs et extérieurs (12a à 12e), au moins trois rails de montage intérieurs (12a, 12b, 12c) étant prévus pour recevoir les roues porteuses et les roues d'appui (6a, 6b ; 7).

6. Dispositif de transport selon l'une des revendications 1 à 5, caractérisé en ce que le chariot (5) présente sur sa joue (10) des rails de montage extérieurs (14a à 14f) et au moins une ouverture (13), et que sur au moins un de ces rails de montage (14a à 14f) est monté un moteur d'entraînement (19) dont le pignon de sortie passe par ladite ouverture (13) et s'engage dans l'élément d'entraînement (11) placé dans un des rails de montage du rail de roulement (1).

7. Dispositif de transport selon l'une des revendications 1 à 6, caractérisé en ce que dans des rails de montage (12d, 12e) du chariot (5) est monté un appareil de levage (24) pour le levage des charges à transporter.

8. Dispositif de transport selon l'une des revendications 1 à 7, caractérisé en ce qu'au moins un rail de roulement (1, 1a, 1b) est fixé à un support (17) à l'aide des rails de montage (9a, 9b).

FIG. 1

FIG. 2

FIG. 3

FIG. 4